# EUROPEAN PATENT SPECIFICATION

(11) **EP 0 923 190 B1**
(45) Date of publication and mention of the grant of the patent: **11.05.2005**
(21) Application number: 98310174.2
(22) Date of filing: 11.12.1998
(51) Int. Cl.: H02N 2/14, H01L 41/04

(54) **Driving apparatus for vibration type actuator apparatus**
Steuereinrichtung für einen Vibrationswellenantrieb
Appareil de commande d'un organe d'actionnement à ondes de vibrations

(30) Priority: 12.12.1997 JP 34345397
(43) Date of publication of application: 16.06.1999
(73) Proprietor: CANON KABUSHIKI KAISHA, Tokyo (JP)
(72) Inventor: Kataoka, Kenichi, Ohta-ku, Tokyo (JP); Yamamoto, Shinji, Ohta-ku, Tokyo (JP); Hayashi, Tadashi, Ohta-ku, Tokyo (JP); Ito, Jun, Ohta-ku, Tokyo (JP)
(74) Representative: Beresford, Keith Denis Lewis

(56) References cited:
- EP-A- 0 693 821
- US-A- 5 034 646
- PATENT ABSTRACTS OF JAPAN vol. 014, no. 328 (E-0952), 13 July 1990 (1990-07-13) -& JP 02 111274 A (NIKON CORP), 24 April 1990 (1990-04-24)
- PATENT ABSTRACTS OF JAPAN vol. 014, no. 401 (E-0971), 30 August 1990 (1990-08-30) -& JP 02 151284 A (NIKON CORP), 11 June 1990 (1990-06-11)

## Description

### BACKGROUND OF THE INVENTION

### Field of the Invention

The present invention relates to a determination method for evaluating a friction surface of a vibration type actuator, a vibration type driving apparatus, a vibration type actuator, a vibration type actuator apparatus, and a copying machine.

### Related Background Art

In conventional vibration type actuators, a vibration member is adapted to form a driving wave in an elastic member by applying alternating signals to a piezoelectric element as an electro-mechanical energy conversion element, a contact member is in press contact with a driving surface of the vibration member, the contact member is frictionally driven relative to the vibration member by the driving wave, and a friction member is provided on one of frictional slide surfaces, for example, on the driving surface of the elastic member. This friction member wears off from sliding against the counter member during driving of the vibration type actuator and powder resulting from the wear sticks to the friction surface, thereby affecting the frictional driving.

An approach to recover the friction surface is, for example, one described in Japanese Patent Application Laid-Open No. 61-207186, wherein a member for removing the wear particle stuck to the friction surface is taken in direct contact with the friction surface to shave off it.

Japanese Patent Application Laid-Open No. 7-59368 also suggests an approach to use a friction material containing abrasive grains and remove the wear particle stuck to the surface thereby.

JP-02-111274 A and JP-02-151284 disclose arrangements for re-starting a vibration-type motor which has stopped due to an overload, and returning the motor to operation at or near resonance.

### SUMMARY OF THE INVENTION

One concern of the application is to provide a vibration type driving apparatus adapted to automatically evaluate a condition of a friction surface between a vibration member and a contact member of a vibration type actuator by detecting a variation amount of an output state of driving speed or the like of the actuator.

Another concern of the application is to provide a vibration type driving apparatus that can perform a recovering operation when the condition of the friction surface becomes bad between the vibration member and the contact member of the vibration type actuator.

A first aspect of the invention provides a method of operating a vibration type actuator as set out in claim 1.

A second aspect of the invention provides a data carrier or signal bearing processor implementable instructions for performing the method.

Other objects of the present invention will become more apparent from the description of embodiments with the drawings.

### BRIEF DESCRIPTION OF THE DRAWINGS

Fig. 1 is a block diagram to show the first embodiment of the present invention;
Fig. 2 is a side view of a vibration type actuator;
Fig. 3 is a plan view to show an electrode arrangement of a piezoelectric member in the vibration member of Fig. 2;
Fig. 4 is a diagram to show the relation of rotational speed to driving frequency of the vibration type actuator;
Fig. 5 is a diagram to show the relation of phase difference between applied voltage and S-phase output to driving frequency of the vibration type actuator;
Fig. 6 is a diagram to show the relation of applied voltage to the driving frequency of the vibration type actuator;
Fig. 7 is a circuit diagram to show a circuit example of driving voltage generating means;
Fig. 8 is a diagram to show waveforms at respective positions of Fig. 7;
Fig. 9 is a block diagram to show the second embodiment of the present invention;
Fig. 10 is a flowchart of the evaluating means of Fig. 9;
Fig. 11 is a diagram to show the relation of fluctuation width of resonant frequency to operational time of the vibration type actuator;
Fig. 12 is a sectional view of the vibration type actuator of the third embodiment;
Fig. 13 is a view to show an example of the friction member of Fig. 12;
Fig. 14 is a block diagram to show the fourth embodiment of the present invention;
Fig. 15 is a flowchart to explain the operation of Fig. 14;
Fig. 16 is a schematic diagram to show an example of recovering means;
Fig. 17 is a schematic diagram to show another example of the recovering means;
Fig. 18 is a structural diagram to show the structure of a copying machine;
Fig. 19 is a block diagram to show the fifth embodiment of the present invention;
Fig. 20 which comprised of Figs. 20A and 20B is a flowchart to explain the operation of Fig. 19;
Fig. 21 is a flowchart to explain the operation of the recovering operation 1 of Figs. 20A and 20B;
Fig. 22 is a flowchart to explain the operation of the recovering operation 2 of Figs. 20A and 20B; and
Fig. 23 is a block diagram to show a modification of the second embodiment.

### DESCRIPTION OF THE PREFERRED EMBODIMENTS

### (First Embodiment)

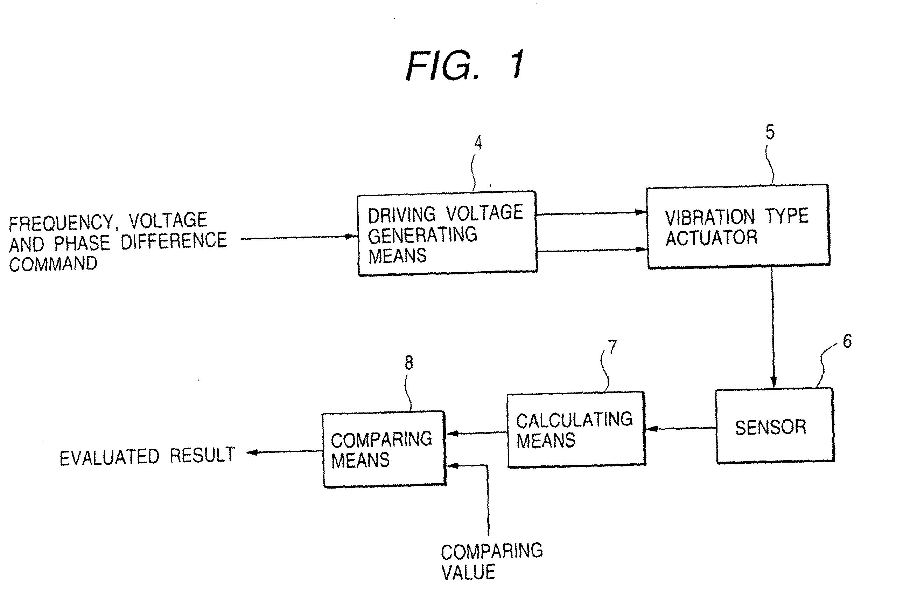

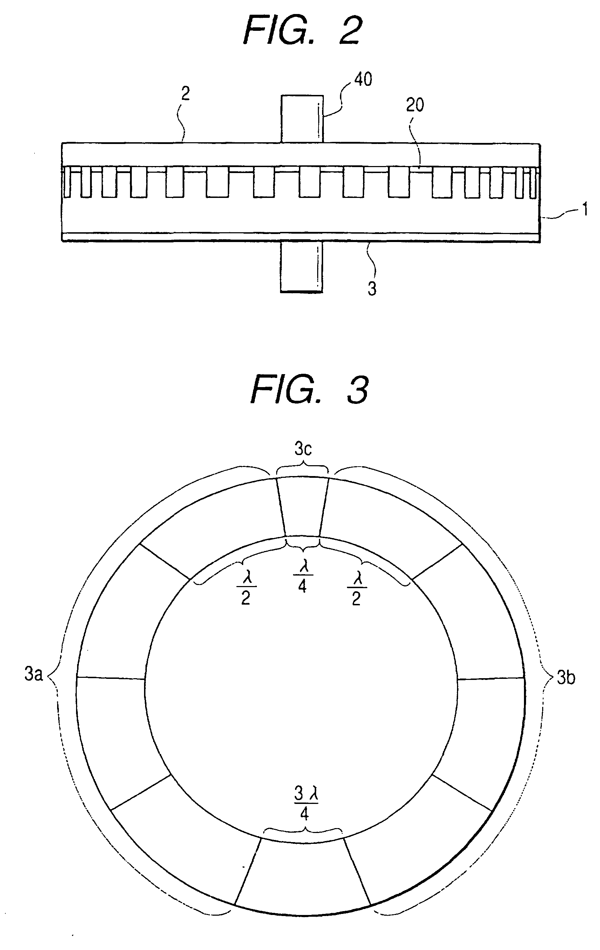

Fig. 1 is a block diagram to show the first embodiment of the present invention and Fig. 2 is a structural diagram to show an example of an actuator of a circular ring shape, which is one of the vibration type actuators. First, the actuator will be described briefly.

In Fig. 2, reference numeral 1 designates a vibration member so arranged that a piezoelectric element 3 as an electro-mechanical energy conversion element is bonded to one surface of an elastic member of a ring shape, 2 designates a rotor as a contact member kept in press contact with the vibration member 1 by unrepresented pressing means, 20 designates a friction member bonded to the vibration member 1 and interposed between the vibration member 1 and the rotor 2, 40 designates a rotational shaft connected to the center of the rotor, and 3 designates the piezoelectric member bonded to the vibration member 1. The surface of the piezoelectric member 3 is partitioned into a plurality of electrodes in the shape illustrated in Fig. 3.

These electrodes consist of two driving electrode groups 3a, 3b and one sensor electrode portion 3c. In the following description, the driving electrode group 3a will be referred to as A-phase, the driving electrode group 3b as B-phase, and the sensor electrode portion 3c as S-phase. The vibration type actuator illustrated in Fig. 2 is constructed in such structure that a travelling vibration wave is generated in the vibration member 1 by applying alternating voltages with a temporal phase difference of 90° to the A-phase and to the B-phase and force of this vibration is transmitted through frictional force to the rotor 2 kept in press contact via the friction member 20 with the vibration member 1, to rotate the rotor 2.

As described above, the vibration type actuator achieves relative rotation of the rotor 2 to the vibration member 1 with application of the two alternating voltages.

Now, Fig. 1 will be described. Numeral 4 represents driving voltage generating means for applying the two alternating voltages to the vibration type actuator, based on commands from frequency, voltage, and phase difference command means not illustrated, 5 represents the vibration type actuator to which the two alternating voltages are applied, 6 represents a sensor such as an encoder for detecting rotation of the vibration type actuator 5, 7 represents calculating means for obtaining the maximum, minimum, average, variance, standard deviation, etc. every fixed time from the output from the sensor 6 and for performing an arithmetic operation in combination with one or more values out of these, and 8 represents comparing means for comparing the result of the arithmetic operation with a comparing value and for outputting the result to determining means not illustrated.

The principal objective of the calculating means 7 is the arithmetic operation for digitizing a fluctuation width of the output from the sensor 6; for example, the calculating means 7 digitizes fluctuations of the output from the sensor 6 by a method for sampling the output from the sensor 6 a predetermined number of times within a certain period of time every fixed time under constant driving conditions of fixed frequency, voltage, and phase difference and for calculating a difference by subtracting the minimum or average from the maximum or calculating the variance or standard deviation.

The vibration type actuator 5 has such characteristics as to vary the performance depending upon the wear of the contact portion because of the frictional driving. Therefore, long-term use of the actuator will result in gradually increasing fluctuations of rotation, so that the actuator may fail to satisfy the required performance in certain cases. In such cases it becomes necessary to exchange the vibration type actuator 5 or to refresh the friction surface. In the present embodiment the calculating means calculates a fluctuation value of speed under the constant driving conditions, detected by the sensor 6, and the determining means determines that the friction surface is worn out when the fluctuation value is greater than a predetermined value (the comparing value).

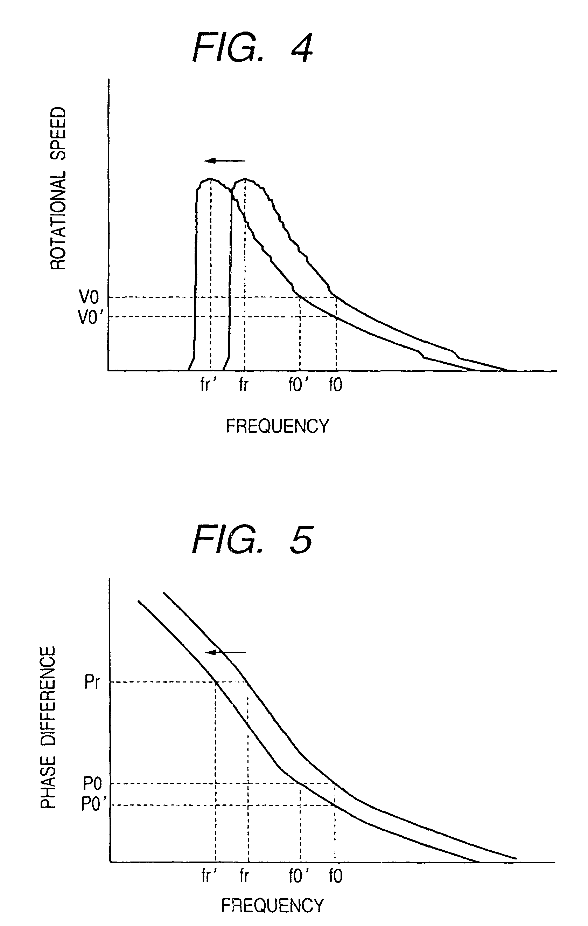

The present embodiment provides the apparatus with the detecting means for detecting degradation of the performance of the vibration type actuator 5. Although it was described herein that the sensor 6 detected the speed, there are some other parameters capable of detecting the degradation of performance of the vibration actuator 5. Fig. 4, Fig. 5, and Fig. 6 are illustrations for explaining such parameters.

Prior to describing these, let us briefly describe what changes take place in the vibration type actuator 5 with progress of the wear of the friction surface.

Many vibration type actuators are driven with application of voltage near the resonant frequency of the vibration member 1. This is because the frequency near the resonant frequency of the vibration member 1 can decrease the magnitude of the applied voltage for obtaining the same vibration amplitude and can efficiently operate the vibration type actuator 5.

Accordingly, the closer to the resonant frequency the frequency is, the greater the vibration amplitude becomes even with the same voltage; therefore, the driving speed also becomes higher. This resonant frequency, however, varies depending upon the surface condition of the friction surface and the temperature and this variation will cause various performance changes.

First, Fig. 4 will be described. Fig. 4 shows the relation of operational speed to driving frequency when the actuator is driven by the constant voltages.

Many vibration type actuators have asymmetric characteristics as illustrated and the driving speed is controlled, normally, by changing the frequency or voltage in the frequency region higher than the resonant frequency. In the diagram fr indicates the resonant frequency of the vibration member 1 at a certain moment and fr' indicates the resonant frequency after slight rotation of the rotor 2 to change the positional relation to the vibration member 1.

It is found from experiments that the difference between fr and fr' is small in good condition of the friction surface but the difference becomes greater with deterioration of the condition. Here, let us define the driving frequency as f0. Then, the operational speed is V0 in the initial state but changes to V0' with the change of the resonant frequency. It is thus seen from this figure that the change of the operational speed becomes greater with increasing change of the resonant frequency, i.e., with degradation of the condition of the friction surface.

Another example for knowing the change of the resonant frequency is the phase difference illustrated in Fig. 5. This phase difference indicates a temporal phase difference between the applied voltage (cycle signal) and the vibration of the vibration member 1 (a signal representing the vibration). Let Pr represent the phase difference when the driving frequency is the resonant frequency of the vibration member 1. In the case where the vibration member 1 is driven at the predetermined frequency f0, the change of the resonant frequency from fr to fr' will cause change from P0 to P0' of the temporal phase difference between the applied voltage and the vibration of the vibration member 1.

Since the magnitude of this phase difference change depends upon the change of the resonant frequency of the vibration member 1, the degree of the change of the resonant frequency can be detected, in a similar fashion to the speed change described above, from the result of detection to detect the phase difference every fixed time during driving under constant driving conditions. A specific configuration for detecting this phase difference employs a method for providing the vibration member with the piezoelectric member for sensor and for detecting the phase difference between the output of this piezoelectric member and the driving cycle signal.

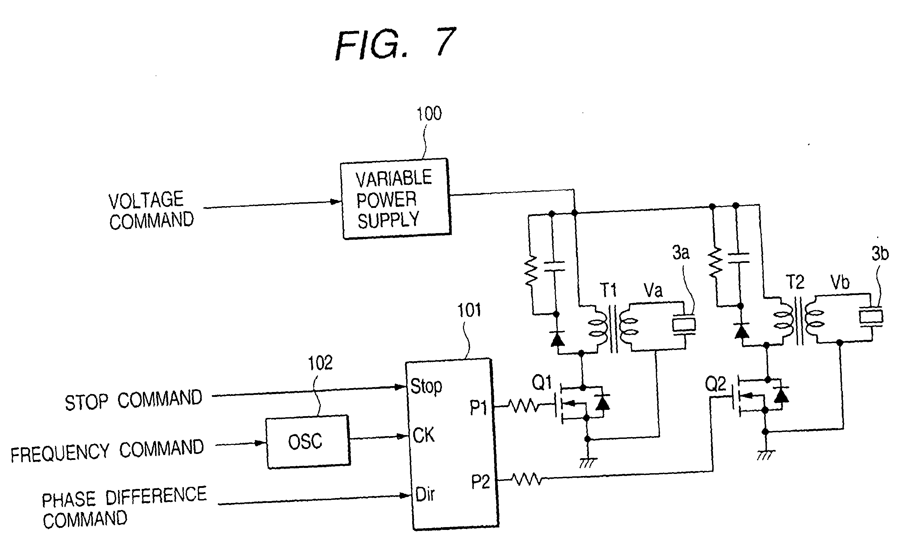

Fig. 7 is a circuit example of the driving voltage generating means. Each of the driving electrode groups 3a, 3b of the piezoelectric member 3 is connected to the secondary winding of transformer T1 or T2, respectively, and MOSFET Q1 or Q2 and a variable power supply 100 for varying the output voltage according to a voltage command from the unrepresented command means are connected to the primary winding of each transformer. With change in the output power of the variable power supply 100 connected to the primary windings of the transformers, the amplitude of the voltages applied to the electrode groups 3a, 3b are varied.

Pulse signals of two phases with the temporal phase shift of 90° from each other, supplied from pulse generating section 101, are applied to gate terminals of respective MOSFETs Q1, Q2. When the current on the primary winding side of the transformers T1, T2 is turned on and off, the alternating voltages boosted appear on the secondary winding side of the transformers.

An oscillator 102 is connected to the pulse generating section 101 and the frequency of output pulses from the oscillator 102 is set according to the frequency command from the unrepresented command means. The output pulses from the pulse generating section 101 thus change according to the output frequency of the oscillator 102.

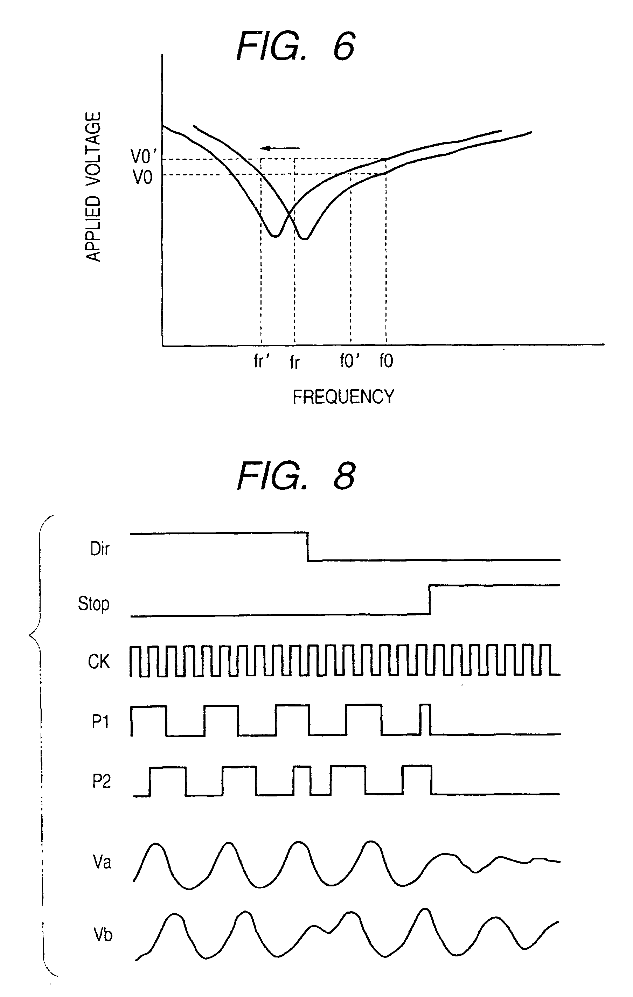

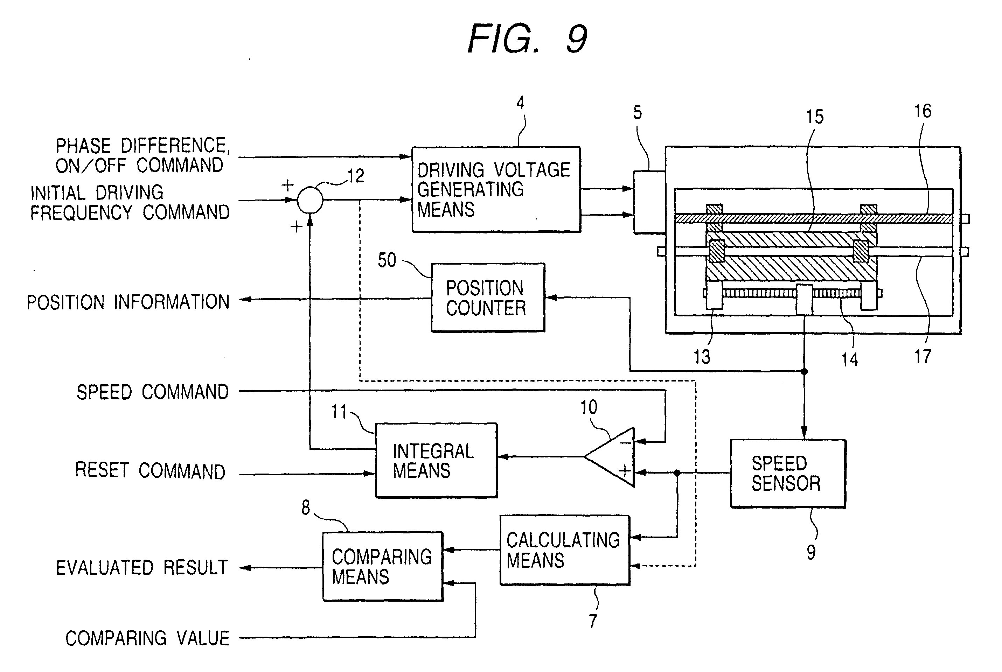

Waveforms at the respective sections are illustrated in Fig. 8. In Fig. 8, Dir represents a rotation direction signal, Stop represents a stop signal, P1, P2 respectively represent the output signals at the output terminals of the pulse generating section 101, and Va, Vb represent the cyclic voltages. Since the impedance of the piezoelectric member 3 varies according to the driving frequency, the impedance of the electrode groups 3a, 3b also varies. From this influence, the amplitude of the voltages on the secondary winding side of the transformers T1, T2 varies according to the driving frequency. This phenomenon is, for example, as illustrated in Fig. 6.

As illustrated, supposing the resonant frequency changes from fr to fr', for example, when the driving frequency is f0, the driving voltage (Va or Vb of Fig. 7) will change from V0 to V0'. Therefore, this change of the driving voltage is detected to detect the degree of the change of the resonant frequency during rotation of the vibration type actuator 5. In this way the condition of the friction surface can be evaluated by evaluating this degree according to predetermined criteria for evaluation.

Accordingly, the condition of the friction surface can be evaluated, in the similar fashion to the speed detection, by detecting the change of the voltage at intervals of fixed time.

### (Second Embodiment)

Fig. 9 is a block diagram to show the second embodiment of the present invention.

In Fig. 9, reference numeral 16 denotes a lead screw directly connected to the rotational shaft of the vibration type actuator 5, 15 denotes a stage which is adapted to move in the axial direction of the lead screw 16 according to an angle of rotation thereof when the lead screw 16 is rotated by the vibration type actuator 5, 17 denotes a guide for assisting the movement of the stage 15, 14 denotes a scale graduated for detecting an amount of the movement of the stage 15, 13 denotes a reader for converting a graduation of the scale 14 to an electric signal, 9 denotes a speed sensor for detecting the moving speed of the stage 15 from the number of graduations within a certain time or from time periods of graduations successively read from the output of the reader 13, and 50 denotes a position counter for detecting the position of the stage 16.

Numeral 10 indicates a differential amplifier for comparing the output from the speed sensor 9 with the speed command from the unrepresented command means and for outputting an amplified output, 11 indicates an integral means for resetting an integral value in response to an reset command from the unrepresented command means and for integrating the output of the differential amplifier 10, and 12 indicates an adding means for adding an initial driving frequency command from the unrepresented command means to the output of the integral means 11, the output of the adding means 12 determining the frequency of the output voltages of the driving voltage generating means 4.

The first embodiment employs the fixed frequency command, voltage command, and phase difference command from the unrepresented command means to the driving voltage generating means 4, whereas the present embodiment employs the driving frequency varying so as to equalize the output of the speed sensor 9 to the speed command.

The operation will be described. When the output of the speed sensor 9 is larger than the speed command, the output of the differential amplifier 10 is a positive value and the output of the integral means 11 increases. Then, the output of the adding means 12 is the sum of the initial driving frequency command and the output of the integral means 11, so as to increase the input to the driving voltage generating means 4, thus increasing the driving frequency.

This results in decreasing the speed, as apparent from the characteristic curve of speed to frequency of Fig. 4. This decreases the output of the speed sensor 9, so that the output of the speed sensor 9 becomes equal to the speed command.

When the output of the position counter 50 becomes coincident with a target position, the unrepresented command means issues an order of off to the driving voltage generating means 4 by an on/off command. When the output is over the target position, the moving direction is reversed by switching the phase difference command to 90° or -90°. The unrepresented command means is configured so as to output the integral reset command to the integral means 11 upon a start and the driving frequency upon the start is determined by the initial driving frequency command.

Let us suppose herein that the vibration type actuator 5 is rotating at fixed speed according to the speed command. Without any change in the resonant frequency of the vibration type actuator 5, the driving frequency is also kept substantially constant. Once variations of the resonant frequency become large because of progress in the wear of the friction surface of the vibration type actuator 5, the driving frequency is changed in order to achieve rotation at the same speed, however. Since fluctuations of speed cannot be controlled perfectly to zero, the condition of the friction surface can be detected indirectly by detecting the output of the speed sensor 9 by the calculating means 7.

In the configuration of Fig. 9 the fluctuations of speed are detected from the output of the speed sensor 9 in the similar fashion to Fig. 1. At this time the change of the condition of the friction surface will also change the speed fluctuation amount, but the fluctuation amount is small because of the control of the speed.

If the calculating means 7 is arranged so as to detect the degree of fluctuations of the output from the adding means 12 or fluctuations of the input or output of the integral means 11, the situation of the friction surface can be judged more accurately, because the degree of such fluctuations is greater than the fluctuation width of the output signal from the speed sensor 9. The apparatus is thus configured so as to evaluate whether the condition of the friction surface indicates an incoming of exchange time, how long the remaining lifetime is, etc. by comparing the output from the calculating means 7 with at least one predetermined comparing value in the comparing means 8 and output the evaluated result.

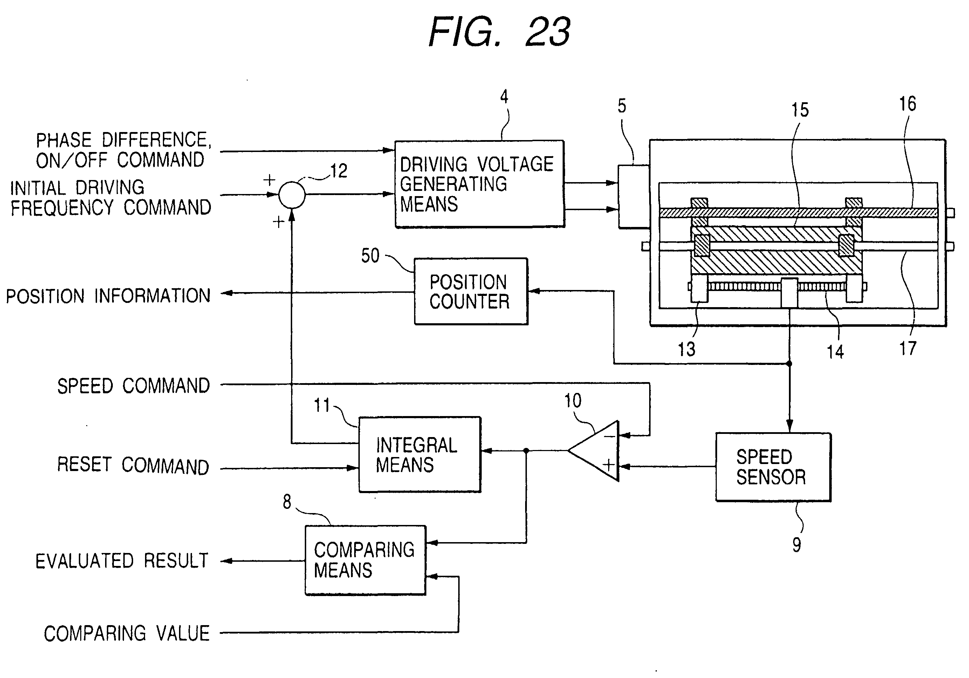

The apparatus may also be configured without the calculating means as illustrated in Fig. 23.

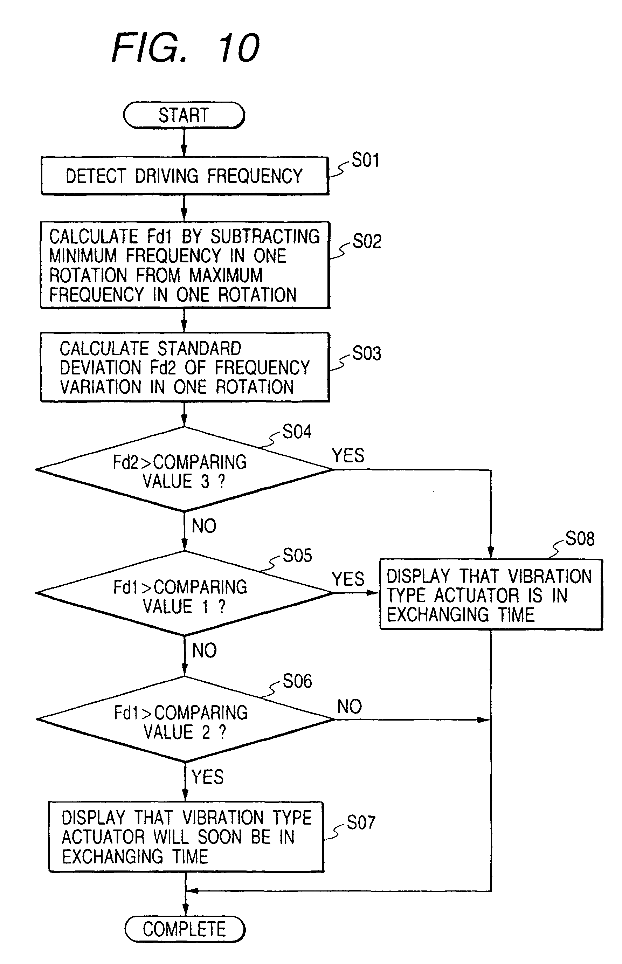

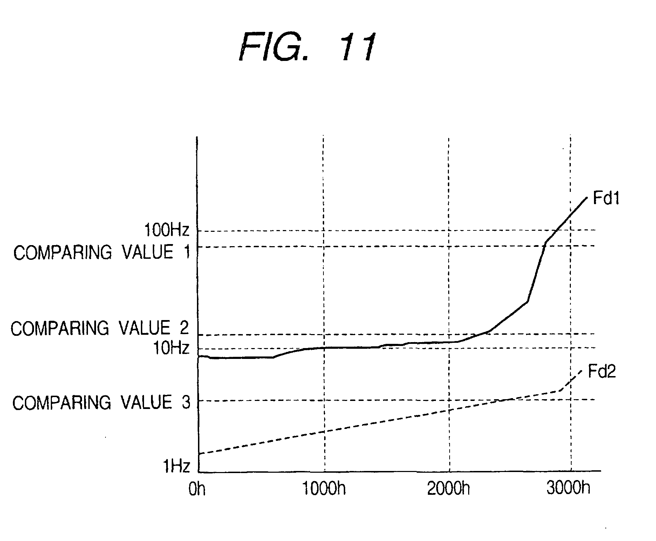

Fig. 10 is a flowchart to show evaluation procedures of the calculating means 7 and comparing means 8 in the structure for detecting the fluctuations of the driving frequency, instead of detecting the fluctuations of speed from the speed sensor. Fig. 11 is a graph to show an example of the relation between degrees of change of driving frequency and cumulative rotation time of the vibration type actuator 5. It is seen from this figure that degradation of degrees of frequency fluctuations is accelerated in the range over the time of 2000 (h).

In Fig. 11, the curve indicated by the solid line represents plots of difference between maximum and minimum of driving frequency during one rotation of the vibration type actuator 5, which will be referred to hereinafter as P-P values (Fd1), and the curve indicated by the dashed line indicates plots of standard deviation values (Fd2) of driving frequency values at respective rotational positions numbering 100 points in one rotation. Comparing value 3 is compared with the standard deviation values Fd2 and comparing values 1, 2 are compared with the P-P values (Fd1).

The evaluation procedures of the evaluating means will be described using the flowchart of Fig. 10.

In this case, the apparatus is configured so as to input the driving frequency command to the calculating means 7 as indicated by the dotted line of Fig. 9 and the functions of the calculating means 7 and comparing means 8 are implemented by software processing in a microcomputer.

After the operation of this flowchart is started, the driving frequency is detected (S01), and first calculated are the P-P value (Fd1) and the standard deviation (Fd2) of the driving frequency during one rotation of the vibration type actuator 5 (detected by the sensor 9) (S02, S03).

Then the standard deviation (Fd2) is compared with the comparing value 3 (S04). If the standard deviation is greater a display means not illustrated displays an indication to indicate the incoming of the exchange time of the vibration type actuator 5 (S08). Then the operation of this flowchart is terminated.

On the other hand, if the standard deviation is smaller than the comparing value 3 in S04, the P-P value (Fd1) is compared with the comparing value 1 (S05). When the P-P value is greater than the comparing value 1, the unrepresented display means displays an indication to indicate the incoming of the exchange time of the vibration type actuator 5 (S08). Then the operation of this flowchart is completed. Otherwise, the P-P value is compared with the comparing value 2 (S06). If the P-P value is greater the display means displays an indication to indicate close proximity to the exchange time (S07). If smaller the evaluation will be ended.

### (Third Embodiment)

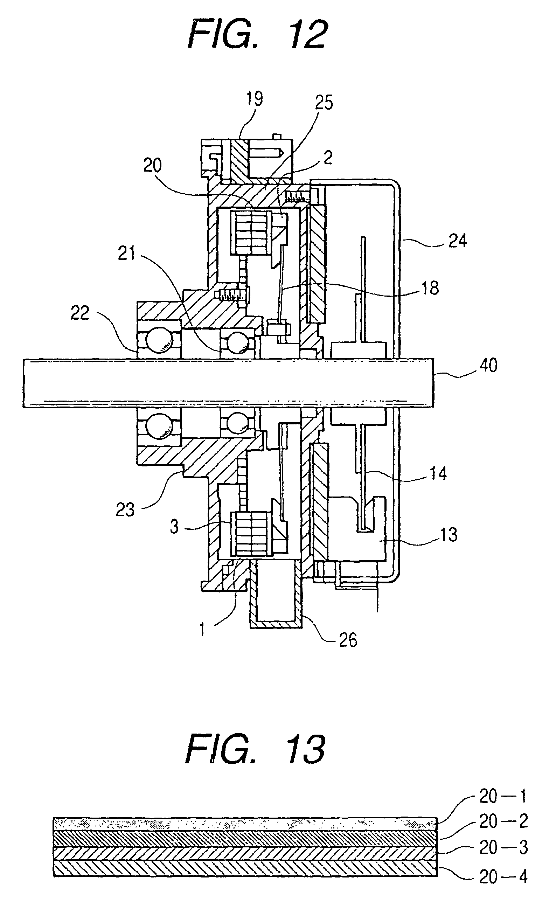

Fig. 12 is a sectional view to show the third embodiment.

In Fig. 12, reference numeral 13 denotes an interrupter, 14 denotes a scale graduated for detecting an angle of rotation of the rotational shaft 40, 18 denotes a spring for keeping the rotor 2 in press contact with the vibration member 1, 19 denotes a connector for supplying the power to the piezoelectric member 3, numerals 21, 22 denote bearings for holding the rotational shaft 40, 23 denotes a base plate, 24 denotes a cover for covering the interrupter 13 and scale 14, 25 denotes a cover for covering the vibration member 1, the rotor 2, etc., and 26 denotes a wear degree confirmation window provided in a part of the cover 25 and below the friction member 20 so as to receive and store the wear particle from the friction member 20. An amount of the wear particle can be readily checked through this window 26 and the exchange time can be confirmed easily from the amount.

Fig. 13 shows an example of the friction member comprised of multiple layers (20-1, 20-2, 20-3, 20-4) which are colored in different colors, e.g., red, yellow, and so on. For example, friction materials of different colors are superimposed each in the thickness of 10 µm. In this case the colors of the wear particle vary according to the degree of progress of the wear, so that the degree of the wear can be confirmed more easily.

### (Fourth Embodiment)

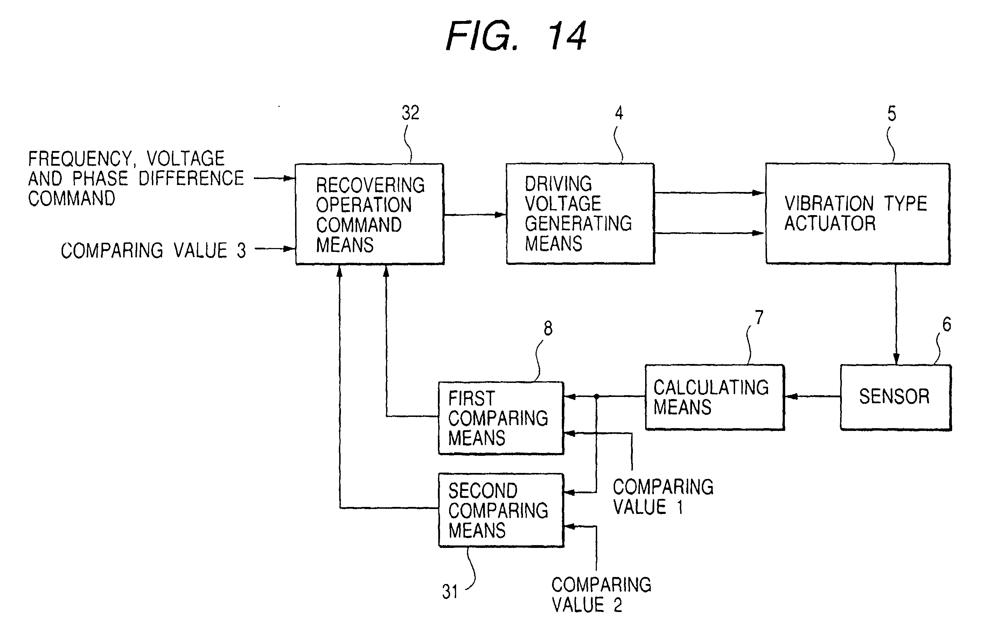

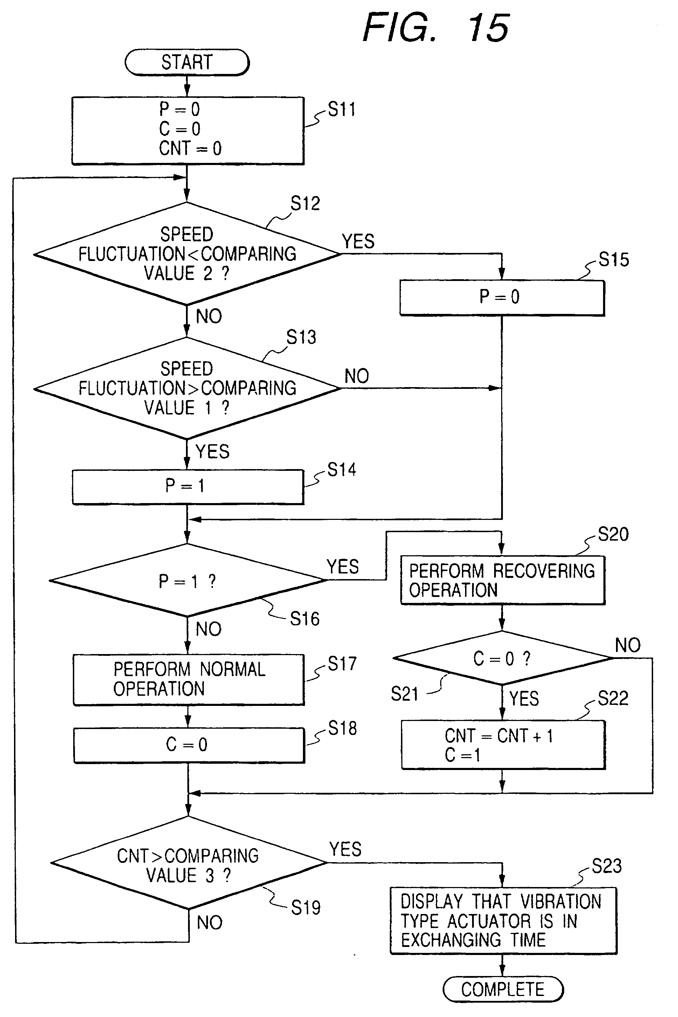

Fig. 14 is a block diagram to show the fourth embodiment and Fig. 15 is a flowchart to show the operation of recovering operation command means.

In Fig. 14, the recovering operation command means 32 is a recovering operation command means for sending a command of operation to the driving voltage generating means 4 by determining whether the vibration type actuator 5 should perform the recovering operation of the friction surface, based on the result of first comparing means 8 for comparing the output of calculating means 7 with the comparing value 1 and the result of second comparing means 31 for comparing the output of calculating means 7 with the comparing value 2.

In Fig. 15, P represents a recovering operation flag, C a number-of-recovering-operations flag, and CNT a recovering operation counter.

This recovering operation command means 32 receives inputs of frequency, voltage, and phase difference commands from the unrepresented command means and a comparing value 3 for the number of recovering operations.

The recovering operation command means 32 determines whether these frequency, voltage, and phase difference commands should be outputted to the driving voltage generating means 4 or these parameters should be outputted according to the recovering operation, based on the comparison results from the first comparing means 8 and from the second comparing means 31, and outputs each command to the driving voltage generating means 4.

After the operation of the flowchart of Fig. 15 is started, P (the recovering operation flag which indicates "unnecessary" by P = 0 or "necessary" by P = 1), C (the number-of-recovering-operations flag which indicates "0" by C = 0 or "1" by C = 1), and CNT (the recovering operation counter) are initialized each to 0 (S11).

In S12 a speed fluctuation (speed variation detected in the similar fashion to Fig. 1) is compared with the comparing value 2. If the speed fluctuation is smaller the recovering operation is set to be unnecessary in S15 (P = 0) and the flag P is checked in S16. If the speed fluctuation is greater in S12 it is determined in S13 this time whether the speed fluctuation is greater than the comparing value 1 (comparing value 1 > comparing value 2). When the speed fluctuation is greater, the flag P is set to P = 1 in S14 and the flow goes to S16.

If P ≠ 1 in S16, the recovering operation is unnecessary. Then the normal operation is carried out in S17. Since the recovering operation is not carried out yet, the number-of-recovering operations flag C is set to C = 0 (S18) and then it is determined whether the number of recovering operations reaches a predetermined number (comparing value 3) (S19).

When the number of recovering operations does not reach the predetermined number in S19, the flow returns to S12 to perform the same processes.

On the other hand, when the recovering operation is necessary with P = 1 in S16, the recovering operation is carried out in S20. When the number-of-recovering-operations flag C = 0 in S21, 1 is added to the recovering operation counter CNT and the number-of-recovering-operations flag is set as C = 1 in S22.

When the value of the recovering operation counter CNT exceeds the predetermined value (the comparing value 3) in S19, the incoming of the exchange time is displayed in the unrepresented display means in S23. When the value of the recovering operation counter CNT does not exceed the comparing value 3, the flow returns to S12 to repeat the recovering operation before the speed fluctuation becomes smaller than the comparing value 2, so as to set the recovering operation flag P = 0.

Describing in more detail, in the present embodiment the characteristics of the vibration type actuator 5 are good during the initial period and the commands from the unrepresented command means are thus outputted to the driving voltage generating means 4 as they are. With degradation of the characteristics, however, the variation in the rotational speed will become increasing even if the actuator is driven by the constant frequency, voltage, and phase difference.

Then, the difference between the maximum and minimum of the rotational speed within the fixed time, calculated in the calculating means 7, becomes larger to increase the input to the first comparing means 8. When the speed fluctuation becomes greater than the comparing value 1, the recovering operation command means 32 successively sets the parameters of the recovering operation for the driving voltage generating means 4. With continuation of the recovering operation the fluctuations become smaller in the speed detected by the sensor 6.

Thereafter, the output of the calculating means 7 becomes smaller, the input to the second comparing means 31 becomes smaller, and the speed fluctuation becomes smaller than the comparing value 2. Then the recovering operation command means 32 is configured so as to end the recovering operation and send the parameters to the driving voltage generating means 4 according to the commands from the unrepresented command means.

Further, the recovering operation command means 32 displays the incoming of the exchange time of the vibration type actuator when the number of recovering operations (the number of recovering operations completed) becomes greater than the comparing value 3. Specifically, every time P transitions from 0 to 1, CNT = CNT + 1 is executed. When the number of transitions of P from 0 to 1, i.e., the number of recovering operations completed reaches the predetermined value, it is indicated that an exchange of actuator is necessary.

In another configuration, the apparatus may be constructed so as to end the recovering operation, irrespective of the outputs from the comparing means 8, 31, when the time from the start of recovering operation reaches a predetermined time or when the number of rotations of the actuator 5 becomes not smaller than a predetermined number of rotations.

Next described are the parameters outputted during the recovering operation from the recovering operation command means 32.

For recovery of the friction surface, it is necessary to repeat continuous quick rotation or continuous quick inversion. For that purpose, the voltage command is increased with setting the driving frequency to near the resonant frequency of the vibration type actuator 5. For the inversion operation, the phase difference is repetitively switched between 90° and -90°. Execution of such operation can clear the wear particle stuck to the rotor 2 away therefrom, thereby recovering the performance of the vibration type actuator 5.

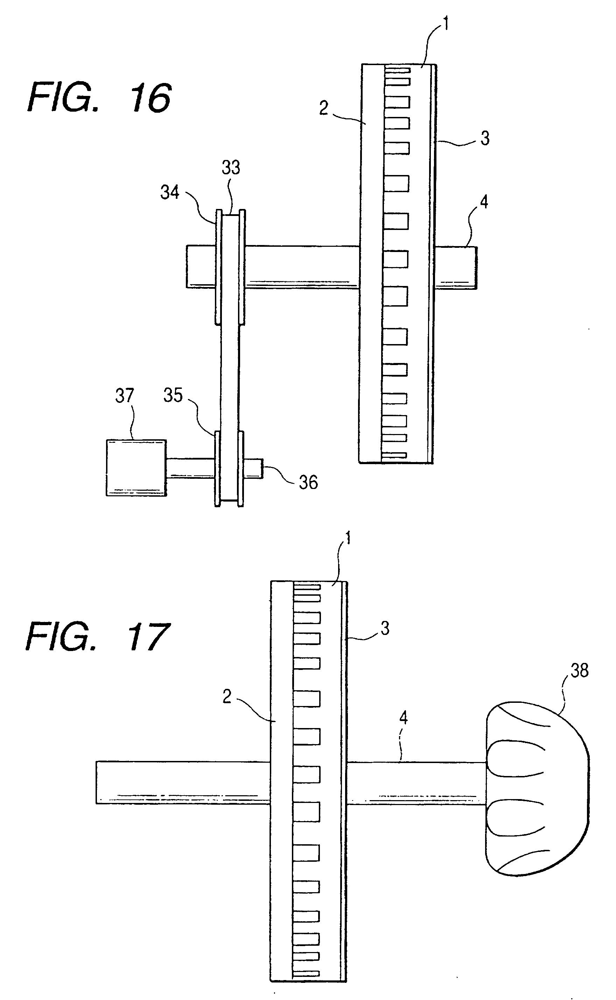

Fig. 16 and Fig. 17 show other recovering means.

In Fig. 16, numeral 33 denotes a belt, 34, 35 denote pulleys between which the belt 33 is stretched, 36 denotes a rotational shaft connected to the center of the pulley 35, and 37 denotes a coupling for connecting another rotating means such as a DC motor not illustrated, to the rotational shaft 36.

If the display device not illustrated is arranged to display the necessity of the recovering operation, for example, with the determination of P = 1 in S16 of Fig. 15, the performance of actuator can be recovered on a regular basis even without the means for automatically performing the recovering operation as illustrated in Fig. 14. Fig. 16 illustrates the configuration for forcing the vibration type actuator 5 to rotate through the coupling on the occasion of regular maintenance, thereby removing the wear particle.

In Fig. 17, numeral 38 represents a knob for manually rotating the rotational shaft 4 of the vibration type actuator 5. In this case, the operator can readily rotate the rotor 2 by hand when maintenance is necessary. The means for notifying the necessity of the recovering operation or the exchange time of the vibration type actuator 5 may be either one of display devices such as a liquid crystal display or a CRT, alarms from various sound sources, recording on a recording medium such as a floppy disk, a flash ROM, or paper, and a message through a network such as LAN.

### (Fifth Embodiment)

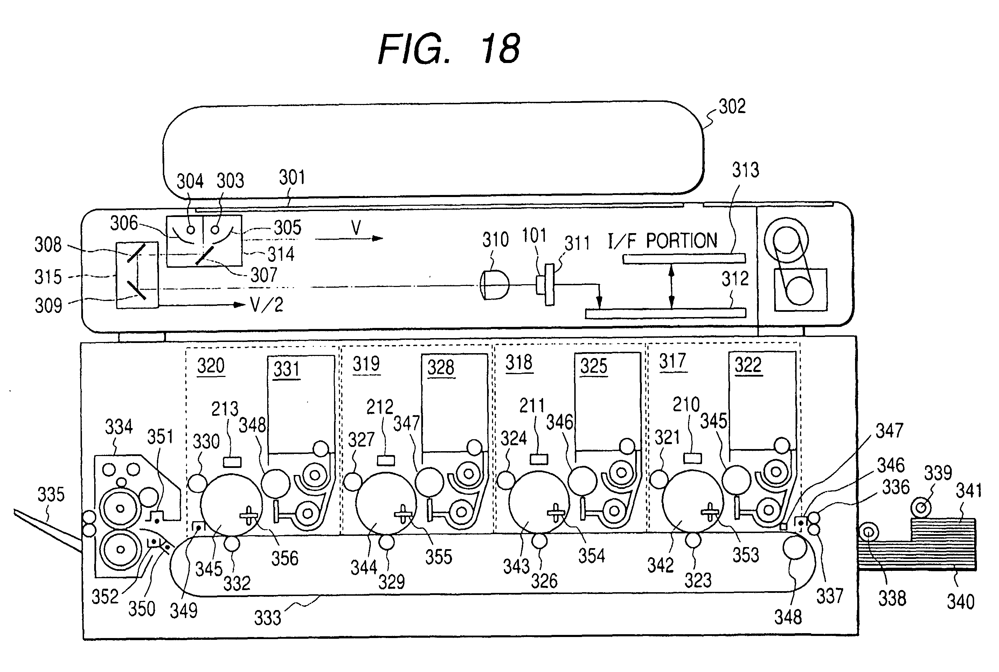

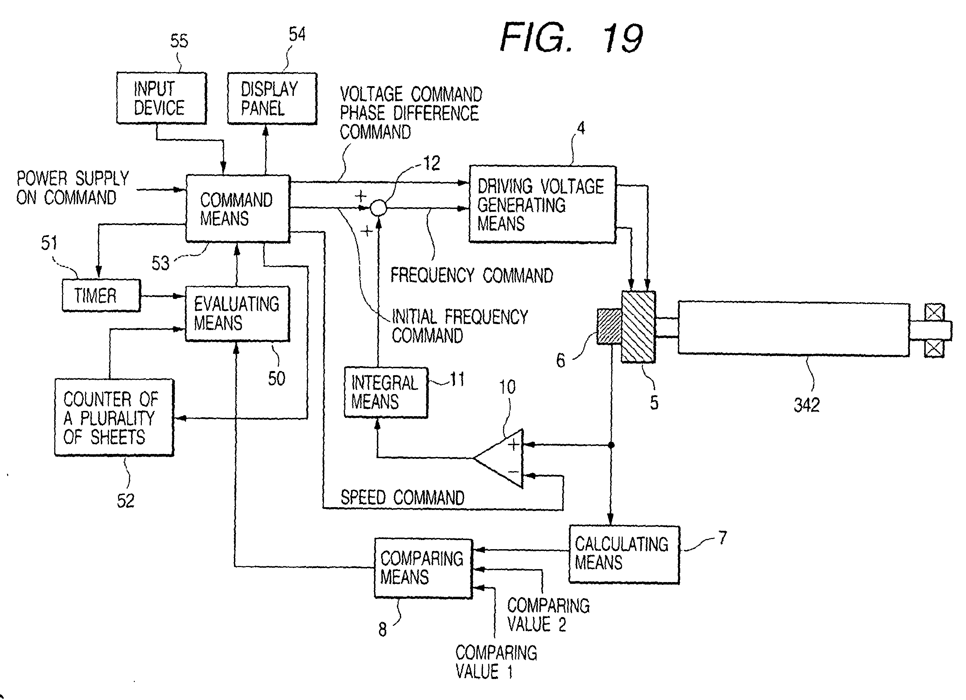

Fig. 18 is a diagram to show the overall structure of a color image forming apparatus which is the fifth embodiment of the present invention and Fig. 19 is a block diagram to show a part of a control section thereof. The structure of the color image forming apparatus will be described referring to Fig. 18.

First described is the structure of a reader section. In Fig. 18, numeral 101 designates a CCD, 311 designates a substrate on which the CCD 101 is mounted, 312 designates a printer processing section, 301 designates an original glass plate, 302 designates an original feed system, 303 and 304 designate light sources for illuminating an original, 305 and 306 designate reflectors for collecting beams from the light sources (303, 304) to the original, 307 to 309 designate mirrors, 310 designates a lens for condensing reflected light or projected light from the original onto the CCD 101, 314 designates a carriage for accommodating the light sources (303, 304), the reflectors (305, 306), and the mirror 307, 315 designates a carriage for accommodating the mirrors (308, 309), and 313 designates an interface section to another IPU or the like. The carriage 314 and the carriage 315 are mechanically moved at speed V and at speed V/2, respectively, in the direction perpendicular to the electrical scanning (main scanning) direction of the CCD 101, thereby scanning (sub-scanning) the entire surface of the original.

The original on the original glass plate reflects the light from the light sources (303, 304) and the reflected light is guided onto the CCD 101 to be converted to electric signals. Then the electric signals (analog image signals) are put into the image processing section 312 to be converted to digital signals. The digital signals thus converted into are processed and thereafter sent to the printer section to be used for formation of image.

Next described is the structure of the printer section. Numeral 317 denotes an M (magenta color) image forming section, 318 denotes a C (cyan color) image forming section, 319 denotes a Y (yellow color) image forming section, and 320 denotes a K (black color) image forming section. Since structures of the respective sections are the same, only the structure of the M image forming section 317 will be described and the description of the other image forming sections will be omitted.

In the M image forming section 317, numeral 342 designates a photosensitive drum, on a surface of which a latent image is formed by light from LED array 210. Numeral 321 represents a primary charger which charges the surface of the photosensitive drum 342 to a predetermined potential, thereby preparing for formation of a latent image. Numeral 322 indicates a developing device, which develops the latent image on the photosensitive drum 342 to form a toner image.

The developing device 322 includes a sleeve 345 for applying a development bias to develop the latent image. Numeral 323 is a transfer charger which effects discharge from the back of transfer belt 333 to transfer the toner image on the photosensitive drum 342 onto a recording sheet or the like placed on the transfer belt 333. Since the present embodiment has high transfer efficiency, it is not provided with a cleaner section used to be employed. (It is needless to mention that no problem arises with addition of the cleaner section.)

Next described are procedures for forming an image on the recording sheet or the like. Recording sheets or the like stored in cassettes (340, 341) are picked up one by one by a pickup roller (339, 338) to be supplied onto the transfer medium carrying belt 333 by feed rollers (336, 337). The recording sheet thus supplied is charged by adhesion charger 346.

Numeral 348 indicates a transfer belt roller, which drives the transfer medium carrying belt 333 and which charges the recording sheet or the like in cooperation with the adhesion charger 346 to adhere the recording sheet or the like to the transfer medium carrying belt 333. Numeral 347 represents a sheet leading end sensor, which detects the leading end of the recording sheet on the transfer medium carrying belt 333.

A detected signal by the sheet leading end sensor is sent from the printer section to the color reader section to be used as a sub-scanning synchronous signal when the video signals are sent from the color reader section to the printer section. After this, the recording sheet or the like is carried by the transfer medium carrying belt 333 and toner images are formed on the surface thereof in the order of M, C, Y, and K in the image forming sections 317 to 320. The recording sheet or the like having passed the K image forming section 320 undergoes charge elimination in charge eliminating charger 349 in order to facilitate separation thereof from the transfer medium carrying belt 333 and thereafter is separated from the transfer medium carrying belt 333.

Numeral 350 stands for a stripper charger which prevents image disturbance due to stripping charge when the recording sheet or the like is separated from the transfer medium carrying belt 333. The recording sheet or the like thus separated is charged by pre-fixation chargers (351, 352) in order to make up for adhesive strength of toner so as to prevent the image disturbance and thereafter the toner image is thermally fixed by fixing device 334. Then the recording sheet is discharged onto a discharge tray 335.

Here, known vibration type actuators are used as driving actuators for rotating the photosensitive drums (342 to 345) and the transfer medium carrying belt roller 348. Since one image is formed by cooperative operation of the plural actuators as described, degradation of characteristics of even one actuator would result in failing to form a beautiful image.

Fig. 19 is a block diagram to show a driving circuit of the vibration type actuators of Fig. 18. In Fig. 19, numeral 53 represents a command means for issuing commands of frequency (through adder 12), phase difference, and voltage amplitude of the two-phase alternating voltages applied to the vibration type actuator 5, to the driving voltage generating means 4 according to a power on command from an unrepresented further command means or a switch and an output from evaluating means 50 described hereinafter, 51 represents a timer for measuring the time while the voltage command is not 0 [V], according to a command from the command means 53, 52 represents a number-of-copies counter for counting the number of copies, according to a command from the command means 53, 50 represents an evaluating means for outputting an evaluation result to the command means 53 according to outputs from the comparing means 8 receiving inputs of comparing values 1, 2 (see Fig. 15), from the timer 51, and from the number-of-copies counter 52, 54 represents a display panel for displaying a message received from the command means 53 according to the output of the evaluating means 50, and 55 represents an input device for instructing the command means 53 to execute a copying operation.

The photosensitive drum 342 is connected to the vibration type actuator 5 and is rotating at fixed speed during formation of an image on the recording sheet.

The speed is controlled as follows; the speed is detected by the sensor 6, the differential amplifier 10 detects the difference between the speed command and the current speed, and the integral means 11 integrates this difference. If the current speed is smaller than the speed command, the output from the integral means 11 decreases to change the frequency command being the output of the adding means 12, to a lower frequency. Then the speed increases, as seen from Fig. 4, so as to be controlled to the command speed which is a target speed. In tandem with this, the calculating means 7 detects fluctuations of the speed of the vibration type actuator 5 in the similar fashion to Fig. 1, the comparing means 8 compares the output from the calculating means 7 with the comparing value 1 and with the comparing value 2, and the comparison result is outputted to the evaluating means 50.

The timer 51 is configured so as to measure the time during the operation of the vibration type actuator 5 and the number-of-copies counter 52 counts the number of copies. The operations of the evaluating means 50 and command means 53 will be described using flowcharts.

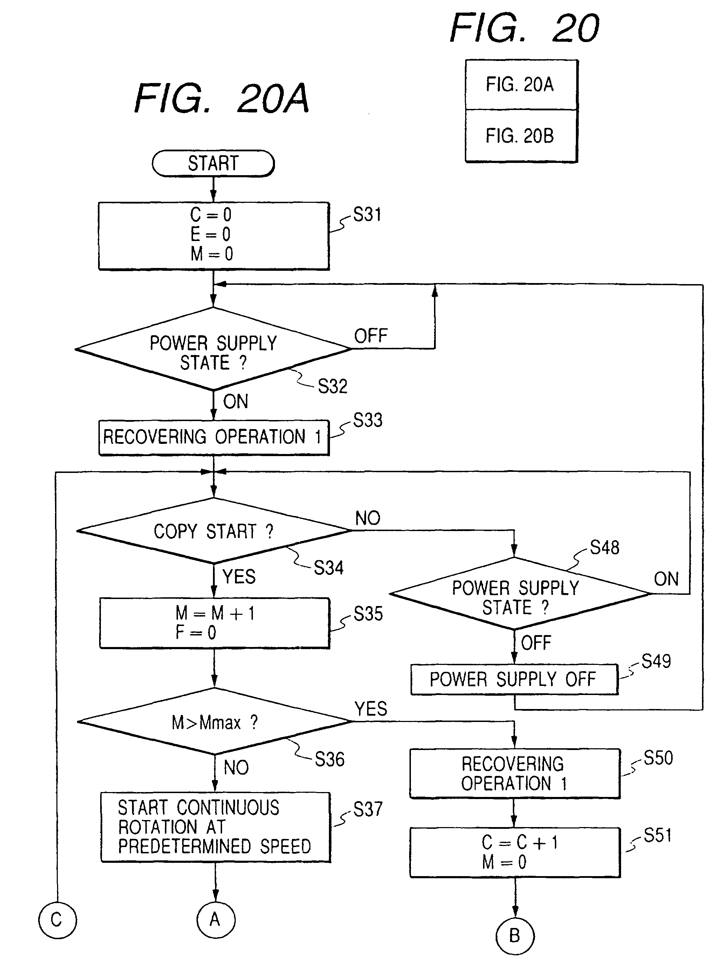

The flowcharts are shown in Figs. 20A and 20B, Fig. 21, and Fig. 22.

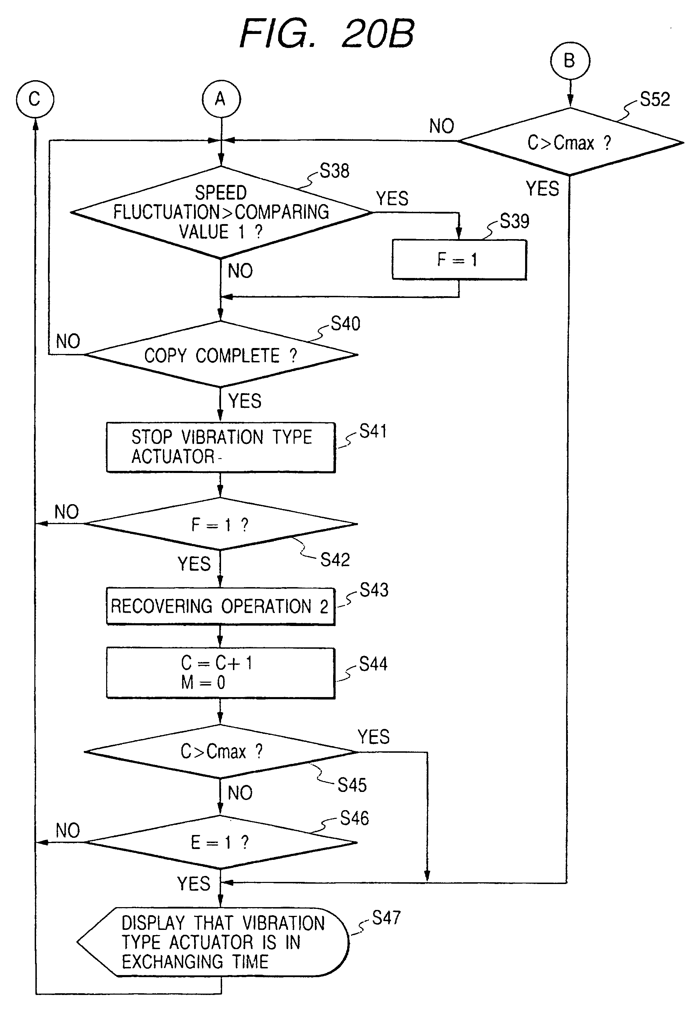

In Figs. 20A and 20B, C represents the number of recovering operations that have been performed, E an exchange flag to indicate whether the exchange time has come, and M indicates the number of copies.

After the operation of Figs. 20A and 20B is started, the flags C, E, and M are initialized each to 0 (S31). When the power on command is received from the unrepresented further command means in Fig. 19 (S32), the recovering operation 1 described hereinafter is executed. This is carried out every power on.

Then a copy start command is awaited from the input device 55 (S34). With reception of the copy start command, 1 is first added to the number of copies (M) and a recovery execution flag (F) to indicate whether the recovering operation should be carried out is reset to 0 (S35). When the number of copies reaches a predetermined number (Mmax) (S36), the recovering operation 1 described hereinafter is carried out (S50); if not, the copying operation is started (S37).

After the recovering operation is carried out in S50, 1 is added to the number of recovering operations (C) and the number of copies (M) is reset to 0 in S51. It is then determined whether the number of recovering operations C exceeds a predetermined number (Cmax) (S52). If yes an indication to indicate the incoming of the exchange time of the vibration type actuator 5 is displayed on the display panel 54 (S47).

If the number C does not exceed the predetermined number (Cmax) in S52, the flow goes to S38 to return to the copying operation.

In the copying operation the command means 53 outputs the speed command, voltage command, phase difference command, and initial frequency command so as to implement the speed of rotations during the copying operation.

When the speed fluctuation obtained by the calculating means 7 is greater than the comparing value 1 in S38, the recovery execution flag (F) is set to 1 in order to carry out the recovering operation 2 described hereinafter (S39).

On the other hand, when the speed fluctuation is smaller than the comparing value 1, the comparison between the speed variation and the comparing value 1 is repeated before the copying operation is completed (S38, S40). After completion of the copying operation, the vibration type actuator 5 is stopped (S41). When the recovery execution flag (F) is 0 in S42, the next copy start is awaited. When the recovery execution flag (F) is 1, the recovering operation 2 described hereinafter is carried out (S43).

After completion of the recovering operation 2, 1 is added to the number of recovering operations (C) and the number of copies (M) is reset to 0 (S44). When the number of recovering operations (C) exceeds the predetermined number (Cmax) in S45, the indication of the incoming of the exchange time is displayed in the display panel 54 and the next copy start is awaited (S47). When the number of recovering operations (C) does not exceed the predetermined number (Cmax) in S45, the flow goes to S46 to check the exchange flag (E). If the exchange flag (E) is 0 the next copy start is awaited.

When the exchange flag (E) is 1 in S46, the indication of the incoming of the exchange time is displayed in the display panel 54 and the next copy start is awaited (S47).

The recovering operation is carried out in this way with degradation of the characteristics of the vibration type actuator 5 or on the regular basis, whereby the friction surface of the vibration type actuator 5 is refreshed, so that a beautiful image can always be formed on the recording sheet.

The reason why the recovering operation 1 is carried out at on of power is that the period from power off to power on is normally relatively long and the rotor 2 may be fixed to the friction member 20 in certain cases where the friction member 20 of the vibration type actuator 5 is resin.

If the rotor were separated by vibration of the vibration member 1 the wear particle could stick to the rotor 2 so as to degrade the characteristics. Even if the sticking is of the extent that does not affect the image, the degradation could proceed gradually. Therefore, the friction surface can always be kept in good order by carrying out the recovering operation 1 every on of power.

In the case where the apparatus is continuously used with keeping the power on, the friction surface can also be kept similarly in good order by carrying out the recovering operation 1 every predetermined number (M).

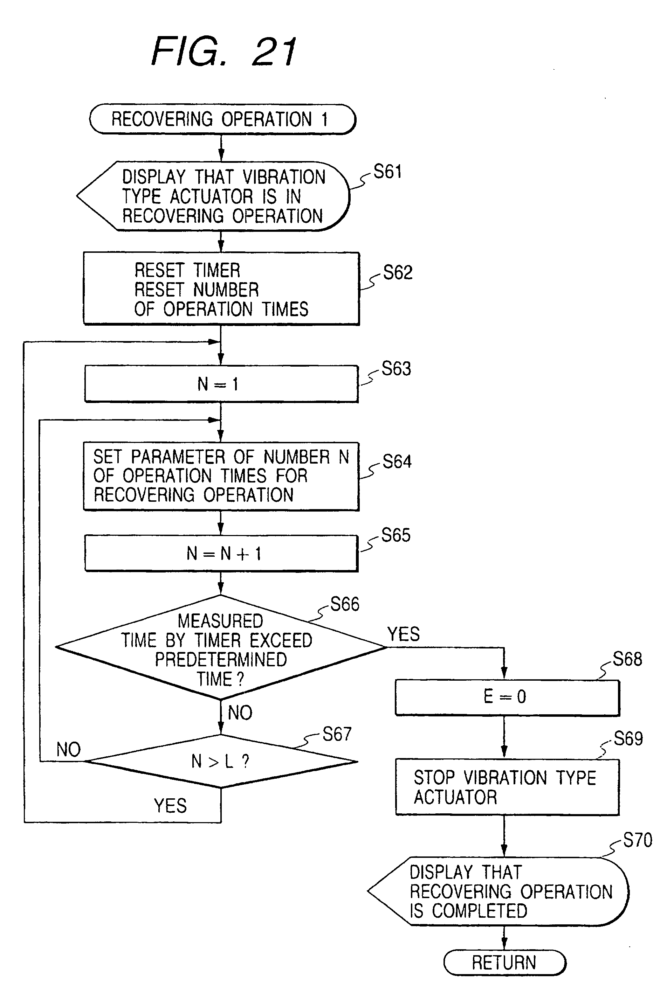

Now, the recovering operation 1 will be described referring to Fig. 21. First, progress of the recovering operation or preparation is displayed in the display panel 54 (S61) and measurement of time is started after resetting the timer 51 and the number of operations (S62).

Then the parameter N for recovering operation is set to N = 1 (the first operation) (S63), the parameters are set for the Nth recovering operation (S64), then 1 is added to N (S65), and whether the timer exceeds a predetermined time is determined (S66).

If the timer does not exceed the predetermined time in S66, it is determined whether the number of recovering operations exceeds a predetermined value L (S67). If not the flow returns to S64 to carry out the same operation. If the number exceeds the predetermined value the flow returns to S63.

Namely, this recovering operation is carried out with changing the parameters. With changing the parameters, the actuator is driven in different driving patterns, e.g., by driving at high driving speed or by repeating inversion.

On the other hand, when the measured time of the timer 51 exceeds the predetermined time in S66, the exchange flag is set to E = 0 to stop the vibration type actuator 5 (S69). Then completion of the recovering operation is displayed on the display panel 54 or the indication to indicate the progress of recovering operation is erased (S70). Then the recovering operation 1 is ended.

This achieves the recovering effect to some extent, but perfect recovery could not be accomplished in some cases, because the recovering operation 1 is the operation carried out for the fixed time. Then, the speed variation would exceed the comparing value 1.

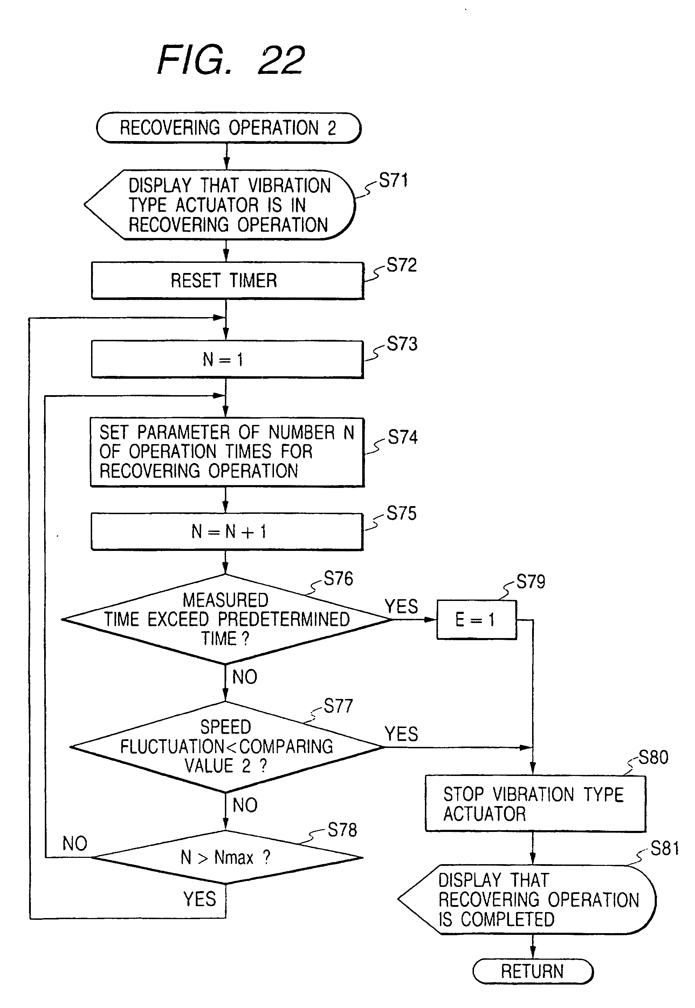

On that occasion, the recovering operation 2 is carried out to return the condition of the friction surface into good order. Now, the recovering operation 2 will be described referring to Fig. 22. First, the progress of the recovering operation or preparation is displayed on the display panel 54 (S71) and the measurement of time is started after resetting of the timer 51 (S72).

The recovering operation 2 is carried out in different modes with changing the parameters, similar to the recovering operation 1 (S73 to S78, or S74 to S78).

When the speed fluctuation becomes smaller than the comparing value 2, i.e., when the friction surface is recovered in S77, the vibration type actuator 5 is stopped (S80). Then the completion of the recovering operation is displayed on the display panel 54 (S81) or the indication to indicate the progress of the recovering operation is erased. Then the operation is terminated.

When the measured time of the timer 51 exceeds the predetermined time during driving with changing the parameters in S76, it is determined that recovery cannot be expected by the recovering operation. Then the exchange flag (E) is set to 1 in S79 to stop the vibration type actuator 5 (S80). Then the completion of the recovering operation is displayed on the display panel 54 or the indication to indicate the progress of the recovering operation is erased. Then the operation is completed.

With increasing wear of the friction member 20, the execution of the recovering operation will result in failing to recover the desired performance, because the output torque of the vibration type actuator 5 is decreased, so as to increase load fluctuations and influence of sticking of the wear particle.

In that case, it is determined that recovery cannot be expected by the recovering operation 2 and the indication to indicate the incoming of the exchange time is displayed on the display panel 54. In the present embodiment the actuator is replaced by another when it cannot be recovered by the recovering operation 2. In another configuration, the apparatus may also be arranged to perform the recovering operation with another recovering means as illustrated in Fig. 16 or Fig. 17.

The operation of one vibration type actuator was described herein, but, in the case wherein there are four vibration type actuators for the respective photosensitive drums (342 to 345) and one vibration type actuator connected to the transfer medium carrying belt roller 348 for driving the transfer medium carrying belt 333 as illustrated in Fig. 18, the recovering operations of the actuators are carried out simultaneously. This is because it is assumed that conditions of the friction surfaces are almost identical from substantially like operations of the five vibration type actuators and because the photosensitive drums (342 to 345) and transfer medium carrying belt 333 could be damaged if only one of the actuators is rotated, as the transfer medium carrying belt 333 is in contact with the photosensitive drums (342 to 345).

## Claims

1. A method of controlling a vibration type actuator for generating a vibration on a vibration member (1) by applying a cyclic signal to an electro-mechanical conversion element (3) so as to drive a movable member (2) using a frictional force caused between the vibration member (1) and the movable member (2) in accordance with the vibration,
**characterised by** comprising the steps of
detecting a change of an output from the vibration type actuator or a change of the cyclic signal, while the vibration type actuator is driven under a predetermined driving condition; and
evaluating a frictional state of contacting surfaces of the vibration member (1) and the movable member (2), which contact with another, on the basis of an information as to whether an amount of the change of the output from the vibration type actuator or an amount of the change of the cyclic signal exceeds a predetermined amount or not.

2. A method according to claim 1, wherein the evaluating step is executed on the basis of the change amount of the cyclic signal when the vibration type actuator is driven with a constant speed.

3. A method according to claim 1, wherein the evaluating step is executed on the basis of the change amount of the output from the vibration type actuator when the vibration type actuator is driven under a condition in which the cyclic signal is in constant value.

4. A method according to claim 2, wherein the amount of the change of the cyclic signal includes a variation range of a frequency of the cyclic signal or a variation range of an amplitude of the cyclic signal.

5. A method according to claim 3, wherein the change amount of output of the vibration type actuator includes a variation range of the driving speed of the vibration type actuator.

6. A method according to any one of claims 1 to 5, wherein a notification is executed when, in the evaluating step, the information that the amount of the change of the output from the vibration type actuator or the amount of the change of the cyclic signal exceeds the predetermined amount is obtained.

7. A method according to any one of claims 1 to 5, wherein a drive for removing wear particles attached on the contacting surfaces is executed when, in the evaluating step, the information that the amount of the change of the output from the vibration type actuator or the amount of the change of the cyclic signal exceeds the predetermined amount is obtained and it is evaluated that the frictional state of the contacting surfaces of the vibration member and the movable member is inadequate.

8. A method according to claim 7, wherein the drive for removing the wear particles is a driving of the vibration type actuator with a speed higher than a speed in a predetermined condition.

9. A method according to claim 7 or 8, wherein after the drive for removing the wear particles is executed a predetermined number of times, a notification is executed.

10. A method according to claim 6 or 9, wherein the notification includes an information of instructing to exchange worn members.

11. A data carrier carrying processor-implementable instructions for controlling a processor to carry out a method according to any of claims 1 to 10.

## Patentansprüche

1. Verfahren zum Steuern einer Schwingungswellenbetätigungsvorrichtung zur Erzeugung einer Schwingung bei einem Schwingungselement (1), indem ein zyklisches Signal an ein elektromechanisches Umwandlungselement (3) angelegt wird, um ein bewegbares Element (2) unter Verwendung einer Reibungskraft anzutreiben, die zwischen dem Schwingungselement (1) und dem bewegbaren Element (2) entsprechend der Schwingung verursacht wird,
**gekennzeichnet durch** Schritte
zum Erfassen einer Änderung einer Ausgabe von der Schwingungswellenbetätigungsvorrichtung oder einer Änderung des zyklischen Signals, während die Schwingungswellenbetätigungsvorrichtung unter einer vorbestimmten Antriebsbedingung angetrieben wird, und
zum Auswerten eines Reibungszustands von Kontaktoberflächen des Schwingungselements (1) und des bewegbaren Elements (2), die miteinander in Kontakt sind, auf der Grundlage einer Information bezüglich dessen, ob eine Größe der Änderung der Ausgabe von der Schwingungswellenbetätigungsvorrichtung oder eine Größe der Änderung des zyklischen Signals eine vorbestimmte Größe überschreitet oder nicht.

2. Verfahren nach Anspruch 1, wobei der Auswertungsschritt auf der Grundlage der Änderungsgröße des zyklischen Signals ausgeführt wird, wenn die Schwingungswellenbetätigungsvorrichtung mit einer konstanten Geschwindigkeit angetrieben wird.

3. Verfahren nach Anspruch 1, wobei der Auswertungsschritt auf der Grundlage der Änderungsgröße der Ausgabe von der Schwingungswellenbetätigungsvorrichtung ausgeführt wird, wenn die Schwingungswellenbetätigungsvorrichtung unter einer Bedingung angetrieben wird, bei der das zyklische Signal einen konstanten Wert aufweist.

4. Verfahren nach Anspruch 2, wobei die Größe der Änderung des zyklischen Signals einen Veränderungsbereich einer Frequenz des zyklischen Signals oder einen Veränderungsbereich einer Amplitude des zyklischen Signals umfasst.

5. Verfahren nach Anspruch 3, wobei die Änderungsgröße der Ausgabe der Schwingungswellenbetätigungsvorrichtung einen Veränderungsbereich der Antriebsgeschwindigkeit der Schwingungswellenbetätigungsvorrichtung umfasst.

6. Verfahren nach einem der Ansprüche 1 bis 5, wobei eine Benachrichtigung ausgeführt wird, wenn in dem Auswertungsschritt die Information erhalten wird, dass die Größe der Änderung der Ausgabe von der Schwingungswellenbetätigungsvorrichtung oder die Größe der Änderung des zyklischen Signals die vorbestimmte Größe überschreitet.

7. Verfahren nach einem der Ansprüche 1 bis 5, wobei ein Antrieb zur Entfernung von Verschleißpartikeln, die bei den Kontaktoberflächen angebracht sind, ausgeführt wird, wenn in dem Auswertungsschritt die Information, dass die Größe der Änderung der Ausgabe von der Schwingungswellenbetätigungsvorrichtung oder die Größe der Änderung des zyklischen Signals die vorbestimmte Größe überschreitet, erhalten wird und es ausgewertet wird, dass der Reibungszustand der Kontaktoberflächen des Schwingungselements und des bewegbaren Elements unzureichend ist.

8. Verfahren nach Anspruch 7, wobei der Antrieb zur Entfernung der Verschleißpartikel ein Antreiben der Schwingungswellenbetätigungsvorrichtung mit einer Geschwindigkeit umfasst, die höher als eine Geschwindigkeit bei einer vorbestimmten Bedingung ist.

9. Verfahren nach Anspruch 7 oder 8, wobei, nachdem der Antrieb zur Entfernung der Verschleißpartikel eine vorbestimmte Anzahl von Malen ausgeführt ist, eine Benachrichtigung ausgeführt wird.

10. Verfahren nach Anspruch 6 oder 9, wobei die Benachrichtigung eine Information zum Anweisen eines Austausches von abgenutzten Elementen umfasst.

11. Datenträger zum Tragen von prozessorimplementierbaren Anweisungen zur Steuerung einer Verarbeitungseinrichtung, ein Verfahren nach einem der Ansprüche 1 bis 10 auszuführen.

## Revendications

1. Procédé de commande d'un actionneur du type à vibration pour la génération d'une vibration sur un élément vibratoire (1) par l'application d'un signal périodique à un élément de conversion électro-mécanique (3) afin d'entraîner un élément mobile (2) en utilisant une force de frottement engendrée entre l'élément vibratoire (1) et l'élément mobile (2) conformément à la vibration,
**caractérisé en ce qu'**il comprend les étapes dans lesquelles
on détecte une variation d'un signal de sortie de l'actionneur du type à vibration ou une variation du signal périodique, tandis que l'actionneur du type à vibration est attaqué sous une condition d'attaque prédéterminée ; et
on évalue un état de frottement des surfaces en contact de l'élément vibratoire (1) et de l'élément mobile (2), qui sont en contact l'une avec l'autre, sur la base d'une information indiquant si une grandeur de la variation du signal de sortie de l'actionneur du type à vibration ou une grandeur de la variation du signal périodique dépasse ou non une grandeur prédéterminée.

2. Procédé selon la revendication 1, dans lequel l'étape d'évaluation est exécutée sur la base de la grandeur de variation du signal périodique lorsque l'actionneur du type à vibration est attaqué à une vitesse constante.

3. Procédé selon la revendication 1, dans lequel l'étape d'évaluation est exécutée sur la base de la grandeur de variation du signal de sortie de l'actionneur du type à vibration lorsque l'actionneur du type à vibration est attaqué sous une condition dans laquelle le signal périodique est d'une valeur constante.

4. Procédé selon la revendication 2, dans lequel la grandeur de la variation du signal périodique comprend une plage de variation d'une fréquence du signal périodique ou une plage de variation de l'amplitude du signal périodique.

5. Procédé selon la revendication 3, dans lequel la grandeur de variation du signal de sortie de l'actionneur du type à vibration comprend une plage de variation de la vitesse d'attaque de l'actionneur du type à vibration.

6. Procédé selon l'une quelconque des revendications 1 à 5, dans lequel une notification est exécutée lorsque, dans l'étape d'évaluation, l'information selon laquelle la grandeur de la variation du signal de sortie de l'actionneur du type à vibration ou la grandeur de la variation du signal périodique dépasse la grandeur prédéterminée est obtenue.

7. Procédé selon l'une quelconque des revendications 1 à 5, dans lequel une attaque pour enlever des particules d'usure fixées sur les surfaces de contact est exécutée lorsque, dans l'étape d'évaluation, l'information selon laquelle la grandeur de la variation du signal de sortie de l'actionneur du type à vibration ou la grandeur de la variation du signal périodique dépasse la quantité prédéterminée est obtenue et qu'il est évalué que l'état de frottement des surfaces en contact de l'élément vibratoire et de l'élément mobile est incorrect.

8. Procédé selon la revendication 7, dans lequel l'attaque pour enlever des particules d'usure est une attaque de l'actionneur du type à vibration à une vitesse supérieure à une vitesse dans une condition prédéterminée.

9. Procédé selon la revendication 7 ou 8, dans lequel, après que l'attaque pour enlever les particules d'usure a été exécutée un nombre prédéterminé de fois, une notification est exécutée.

10. Procédé selon la revendication 6 ou 9, dans lequel la notification comprend une information demandant par instruction de changer des éléments usés.

11. Support de données portant des instructions exécutables par processeur pour commander un processeur afin qu'il exécute un procédé selon l'une quelconque des revendications 1 à 10.
